**Europäisches Patentamt**

**European Patent Office**

**Office européen des brevets**

(11) Veröffentlichungsnummer: **0 189 199**
**B1**

## EUROPÄISCHE PATENTSCHRIFT

(45) Veröffentlichungstag der Patentschrift: **11.04.90**

(21) Anmeldenummer: **86100870.4**

(22) Anmeldetag: **23.01.86**

(51) Int. Cl.⁵: **B 60 C 11/06**

(54) **Fahrzeugluftreifen.**

(30) Priorität: **25.01.85 DE 3502483**

(43) Veröffentlichungstag der Anmeldung:
**30.07.86 Patentblatt 86/31**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**EP-A-0 069 464**
**EP-A-0 148 151**
**DE-A-1 480 927**
**FR-A-2 049 406**
**FR-A-2 076 641**
**FR-A-2 302 875**
**FR-A-2 444 576**
**US-A-4 078 596**

(73) Patentinhaber: **Continental Aktiengesellschaft**
**Königsworther Platz 1**
**D-3000 Hannover 1 (DE)**

(72) Erfinder: **Trabandt, Hagen**
**Mozartstrasse 8**
**D-3163 Sehnde 1 (DE)**
Erfinder: **Goris, Achillefs**
**Höfeweg 3**
**D-3052 Bad Nenndorf 3 (DE)**

Courier Press, Leamington Spa, England.

## Beschreibung

Die Erfindung betrifft einen Fahrzeugluftreifen mit in der Draufsicht zickzack- oder wellenförmigen, im wesentlichen in Reifenumfangsrichtung verlaufenden Nuten im Laufstreifen, wobei zu den Nuten vorspringende Nasen der Lauffläche mit je einer von V-förmig zueinander verlaufenden Flächen begrenzten Aussparung versehen sind, die sich zumindest im wesentlichen bis zum Grunde der Nuten radial nach innen erstreckt, wobei die beiden zu jeder Aussparung gehörenenden V-förmigen Begrenzungsflächen symmetrisch zu einer quer zur Reifenumfangsrichtung verlaufenden Ebene liegen.

Es ist bekannt, die Querschnittsform der Laufstreifennuten so zu gestalten, daß Fremdkörper, insbesondere kleine Steine—nachdem sie in die Nuten eingedrungen sind—abgestoßen werden. Diese bekannten Maßnahmen zielen vorwiegend darauf ab, dieses Ziel durch eine besondere Querschnittsgestaltung der Nuten zu erreichen.

Aus der EP—A—69 464, die dem Uberbegriff des Anspruchs 1 entspricht, ist das kurzwellige Zurückspringen an den Hauptwendestellen langwelliger Zickzackmuster in der Weise bekannt, daß beide Nutkanten dieser Kurzwellenüberlagerung unterliegen. Zum Steinauswurf trägt dieses Markmal nicht bei, vielmehr ist hierzu der Nutquerschnitt so ausgebildet, daß sich zumindest auf einer der beiden Flanken einer Nut eine über dem Reinfendrehwinkel steigende Terrasse ergibt.

Der Erfindung liegt ebenfalls die Aufgabe zugrunde, ein Laufflächenprofil vorzuschlagen, das imstande ist, kleine Fremdkörper abzustoßen. Jedoch soll diese Aufgabe aufgrund der Erfindung vorwiegend durch eine abgewandelte Grundrißgestalt, d.h. Draufsicht der Profilierungen herbeigeführt werden in der Weise, daß nicht nur die vorerwähnte Abstoßwirkung, sondern gleichzeitig auch eine Verbesserung in der Traktionsfähigkeit erzielt wird.

Zur Lösung dieser Aufgabe sind erfindungsgemäß ausschließlich die zu den Nuten vorspringenden Nasen der Lauffläche mit je einer Aussparung versehen, so daß die senkrecht zur Umfangsrichtung gemessene Nutbreite an den Wendestellen der Nuten vergrößert ist.

Zweckmäßigerweise sind hierbei die V-förmig zueinander verlaufenden Flächen steil und schräg ansteigend verlaufend ausgebildet in der Weise, daß ihr Steilanstieg im wesentlichen demjenigen der Flächen entspricht, die die Nuten, also die zickzack- oder wellenförmigen Umfangsnuten begrenzen.

Durch eine solche Profilierung wird die Traktionsfähigkeit der Laufstreifen erhöht. Zugleich wird erricht, daß etwaige Fremdkörper in die eine Umfangsrichtung oder aber auch in die andere Umfangsrichtung in den Bereich der vorerwähnten Aussparungen ausweichen können, wobei sie in einen sich erweiternden Raum der Nuten gelangen und dann aus dem Profil herausfallen. Dabei sind die klemmenden Flächen vergleichsweise schmal, so daß selbst dort eingeklemmte Fremdkörper durch die elastische Verformung des Laufstreifens bei der Abrollbewegung eine Lockerung erfahren und schließlich in die Bereiche der Umfangsnut gelangen, die durch die vorerwähnten Aussparungen erweitert sind.

Weitere Einzelheiten der Erfindung werden anhand der Zeichnung erläutert, in der ein Ausführungsbeispiel dargestellt ist, das vorzugsweise verwendet werden soll. Es zeigen:

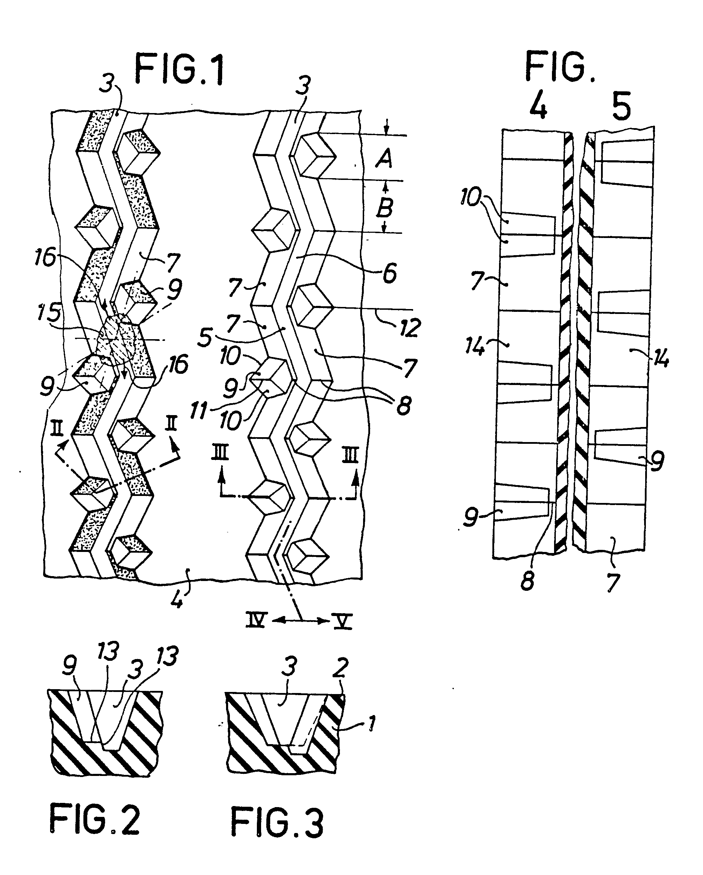

Fig. 1 eine Teildraufsicht auf die Lauffläche eines Reifens für Lastkraftwagen,

Fig. 2 einen Schnitt nach der Linie II—II von Fig. 1.

Fig. 3 einen Schnitt nach der Linie III—III von Fig. 1 und

Fig. 4 und 5 in die Zeichenebene geklappte Darstellungen und Ansichten der Seitenflächen der Umfangsnuten in Richtung der Pfeile IV bzw. V gemäß Fig. 1 gesehen.

Der Laufstreifen 1 des Luftreifens, dessen Lauffläche mit 2 bezeichnet ist, hat vorzugsweise drei, vier oder fünf sich über den gesamten Umfang des Reifens erstreckende Nuten 3, die den Laufstreifen 1 in entsprechend viele Umfangsbänder 4 aufteilen.

Die Nuten 3 bestehen aus nach links ansteigenden Abschnitten 5 und nach rechts ansteigenden Abschnitten 6. Diese werden von entsprechend gerichteten Seitenfläche 7 begrenzt, die schräg und steil seitlich nach außen ansteigen zur Bildung einer im wesentlichen V-förmigen Nut 3. Die Seitenflächen 7 stoßen dabei in gerade verlaufenden Ecken 8 zusammen.

Wechselseitig sind die Nuten 3 jeweils im Abstand einer halben Zickzackteilung an den Stellen mit Aussparungen 9 versehen, an denen die Ränder der Lauffläche 4 am weitesten in Richtung auf die Nuten 3 vorspringen. Diese Aussparungen sind von V-förmig zueinander stehenden Flächen 10 begrenzt, die in eine Geraden 11 zusammenstoßen, welche in einer zum Reifen radialen Ebene liegen, die bei 12 angedeutet ist.

Die Tiefe dieser Aussparungen beträgt etwa 70 bis 90% der Tiefe der Nuten 3, so daß am Grunde der Nuten 3 eine Stufe bei 13 entsteht. Diese Stufe dient gleichzeitig der Bildung von Abnutzungsindikatoren. Ist der Laufstreifen 1 so weit abgefahren, daß der Grund der Aussparungen 9 mittlerweile die Lauffläche 2 gebildet hat, so verändert sich das optische Bild des Laufflächenprofils, um so den erhöhten Abnutzungsgrad anzuzeigen.

Die lichte Breite A der Aussparungen 9 in der Lauffläche 2 des fabrikneuen Reifens ist vergleichsweise groß, und zwar beträgt sie das 0,6- bis 1-fache der Umfangserstreckung der zugehörigen Seitenflächen 7 der Abschnitte 5 und 6.

Demgemäß ligen sich von den einander gegenüberliegenden Flächen 7 praktisch nur vergleichsweise schmale Bereiche gegenüber, die bei 14 in den Fig. 4 und 5 aufgezeigt sind. Gelangt ein Framdkörper 15, z.B. ein Stein in diesen Teil der Nuten 3, so kann zwar zwischen den Bereichen 14 eine Klemmung eintreten, kleine kräft führen jedoch schon zu einer Lockerung bzw. einem Abdrängen in Richtung der Pfeile 16. Damit gelangen die Fremdkörper 15 aber in den Bereich der Aussparungen 9. Die Klemmung wird aufgehoben und die Fremdkörper 15 verlassen die Nut 3.

## Patentansprüche

1. Fahrzeugluftreifen mit in der Draufsicht zickzack- oder wellenförmigen, im wesentlichen in Reifenumfangsrichtung verlaufenden Nuten (3) im Laufstreifen, wobei zu den Nuten (3) vorspringende Nasen der Lauffläche (4) mit je einer von V-förmig zueinander verlaufenden Flächen (10) begrenzten Aussparung (9) versehen sind, die sich zumindest im wesentlichen bis zum Grunde der Nuten (3) radial nach innen erstreckt, wobei die beiden zu jeder Aussparung (9) gehörenden V-förmigen Begrenzungsflächen (10) symmetrisch zu einer quer zur Reifenumfangsrichtung verlaufenden Ebene (12) liegen, dadurch gekennzeichnet, daß ausschließlich die zu den Nuten (3) vorspringenden Nasen der Lauffläche (4) mit je einer Aussparung (9) versehen sind, so daß die senkrecht zur Umfangsrichtung gemessene Nutbreite an den Wendestellen der Nuten (3) vergrößert ist.

2. Fahrzeugluftreifen nach Anspruch 1, dadurch gekennzeichnet, daß die Ebene (12) eine sich radial zum Reifen erstreckende, die Reifenachse enthaltende Ebene ist.

3. Fahrzeugluftreifen nach Anspruch 1, dadurch gekennzeichnet, daß sich die die Aussparungen (9) begrenzenden Flächen (10) steil und schräg nach außen von der Mitte der Nuten (3) aus gesehen erstrecken.

4. Fahrzeugluftreifen nach Anspruch 3, dadurch gekennzeichnet, daß die begrenzenden Flächen (10) einen Anstieg haben, der dem Schräganstieg der Seitenflächen (7) der Nuten entspricht.

5. Fahrzeugluftreifen nach Anspruch 1, dadurch gekennzeichnet, daß der Grund der Aussparungen (9) zur Bildung einer Abnutzungsindikatorfläche geringfügig oberhalb des Grundes der Nuten (3) liegt.

6. Fahrzeugluftreifen nach Anspruch 5, dadurch gekennzeichnet, daß bei im wesentlichen V-förmigem Querschnitt der Nuten (3) die Aussparungen (9) praktisch parallelogrammförmig gestaltet sind, wobei eine kürzere Parallelogrammseite die Sohle (13) bildet und eine längere Parallelogrammseite der Nut (3) abgekehrt ist und parallel zu den die Nuten begrenzenden Flächen verläuft (Fig. 2).

7. Fahrzeugluftreifen nach Anspruch 1, dadurch gekennzeichnet, daß in fabrikneuem, nicht abgenutztem Zustand, jeweils in Reifenumfangsrichtung gemessen, die lichte Weite der Aussparungen (9) etwa dem 0,6- bis 1-fachen der Länge der zugehörigen Seitenflächen (7) der Nuten (3) entspricht.

8. Fahrzeugluftreifen nach Anspruch 1, dadurch gekennzeichnet, daß die Aussparungen (9) wechselseitig an den Nuten (3) vorgesehen sind.

9. Fahrzeugluftreifen nach Anspruch 8, dadurch gekennzeichnet, daß der gegenseitige Abstand benachbarter Aussparungen (9) der halben Teilung des Zickzack bzw. der Welle entspricht.

## Revendications

1. Pneumatique pour véhicule comportant dans la bande de roulement des rainures ayant en vue en plan une forme en zig-zag ou ondulée et orientées sensiblement dans la direction circonférentielle du pneumatique, des protubérances faisant saillie des rainures de la surface de roulement étant chacune pourvues d'un évidement délimité par des surfaces en forme de V dirigées l'une vers l'autre, cet évidement s'étendant radialement vers l'intérieur au moins sensiblement jusqu'au fond des rainures, les deux surfaces de délimitation en forme de V appartenant à chaque évidement étant disposées symétriquement par rapport à un plan orienté perpendiculairement à la direction circonférentielle du pneumatique, caractérisé en ce qu'exclusivement les protubérances de la surface de roulement (4) faisant saillie des rainures (3) sont chacune pourvues d'un évidement (9) de telle sorte que la largeur de rainure, mesurée perpendiculairement à la direction périphérique, soit augmentée aux endroits de déviation des rainures (3).

2. Pneumatique de véhicule selon la revendication 1, caractérisé en ce que le plan (12) est un plan s'étendant radialement par rapport au pneumatique et contenant l'axe du pneumatique.

3. Pneumatique de véhicule selon la revendication 1, caractérisé en ce que les surfaces (10) délimitant les évidements (9) s'étendent avec une forte pente et en oblique vers l'extérieur en les considérant à partir du milieu des rainures (3).

4. Pneumatique de véhicule selon la revendication 3, caractérisé en ce que les surfaces de délimitation (10) ont une pente croissante qui correspond à la pente croissante en oblique des surfaces latérales (7) des rainures.

5. Pneumatique de véhicule selon la revendication 1, caractérisé en ce que le fond des évidements (9) est situé, pour créer une surface d'indication d'usure, légèrement au-dessus du fond des rainures (3).

6. Pneumatique de véhicule selon la revendication 5, caractérisé en ce que pour une section sensiblement en forme de V des rainures (3), les évidements (9) sont profilés pratiquement en forme de parallélogramme, un côté court du parallélogramme formant la base (13) et un côté long du parallélogramme étant opposé à la rainure (3) et orienté parallèlement aux surfaces délimitant les rainures (Figure 2).

7. Pneumatique de véhicule selon la revendication 1, caractérisé en ce que dans un pneumatique neuf et non usé, la largeur intérieure, mesurée dans la direction périphérique du pneumatique, des évidements (9) est comprise entre environ 0,6 et 1 fois la longueur des surfaces latérales associées (7) des rainures (3).

8. Pneumatique de véhicule selon la revendication 1, caractérisé en ce que les évidements (9) sont prévus alternativement dans les rainures (3).

9. Pneumatique de véhicule selon la revendication 8, caractérisé en ce que l'espacement mutuel d'évidements adjacents (9) correspond à la moitié du pas an zig-zag on ondulée.

**Claims**

1. Pneumatic vehicle tyre having grooves (3) in the tread strip, such grooves being zig-zag-shaped or undulatory when viewed from above and extending substantially in the circumferential direction of the tyre, wherein projection members of the tread surface (4) protrude relative to the grooves (3), and each projection member is provided with a respective recess (9), which is defined by surfaces (10) extending in a V-shaped manner relative to one another and extends radially inwardly at least substantially as far as the bottom of the grooves (3), wherein the two V-shaped boundary surfaces (10) belonging to each recess (9) extend symmetrically relative to a plane (12) which extends transversely relative to the circumferential direction of the tyre, characterised in that exclusively those projection members of the tread surface (4) protruding relative to the grooves (3) are each provided with a respective recess (9), so that the groove width, measured vertically relative to the circumferential direction, is enlarged at the turning points of the grooves (3).

2. Pneumatic vehicle tyre according to claim 1, characterised in that the plane (12) is a plane which extends radially relative to the tyre and contains the axis of the tyre.

3. Pneumatic vehicle tyre according to claim 1, characterised in that the surfaces (10), which define the recesses (9), extend steeply and inclinedly outwardly, when viewed from the middle of the grooves (3).

4. Pneumatic vehicle tyre according to claim 3, characterised in that the boundary surfaces (10) have a slope which corresponds to the upward slope of the lateral surfaces (7) of the grooves.

5. Pneumatic vehicle tyre according to claim 1, characterised in that, for the formation of a wear-indicating surface, the bottom of the recesses (9) is situated slightly above the bottom of the grooves (3).

6. Pneumatic vehicle tyre according to claim 5, characterised in that, when the grooves (3) have a substantially V-shaped cross-section, the recesses (9) are formed in a virtually parallelogram-shaped manner, wherein a shorter side of the parallelogram forms the base (13), and a longer side of the parallelogram is remote from the groove (3) and extends parallel to the surfaces defining the grooves (Figure 2).

7. Pneumatic vehicle tyre according to claim 1, characterised in that, when the tyre is measured in the circumferential direction in its unworn state fresh from the factory, the inside width of the recesses (9) corresponds substantially to 0.6- to 1-times the length of the associated lateral surfaces (7) of the grooves (3).

8. Pneumatic vehicle tyre according to claim 1, characterised in that the recesses (9) are provided alternately on the grooves (3).

9. Pneumatic vehicle tyre according to claim 8, characterised in that the mutual distance between adjacent recesses (9) corresponds to half the spacing between the zig-zag or undulation respectively.

FIG.1

FIG. 4 5

FIG.2 FIG.3